**Europäisches Patentamt**

(19) **European Patent Office**

**Office européen des brevets**

(11) Numéro de publication: **0 001 022**
**B1**

(12) **FASCICULE DE BREVET EUROPEEN**

(45) Date de publication du fascicule du brevet: **12.05.82**

(51) Int. Cl.³: **F 16 H 27/02**

(21) Numéro de dépôt: **78400064.8**

(22) Date de dépôt: **21.07.78**

(54) Dispositif moteur et/ou frein pas à pas.

(30) Priorité: **02.08.77 FR 7723702**

(43) Date de publication de la demande:
**07.03.79 Bulletin 79/5**

(45) Mention de la délivrance du brevet:
**12.05.82 Bulletin 82/19**

(84) Etats contractants désignés:
**DE GB NL SE**

(56) Documents cités:
**BE - A - 432 413**
**DE - A - 2 358 680**
**FR - A - 1 326 123**
**GB - A - 1 423 522**
**US - A - 1 387 101**

(73) Titulaire: **ANVAR Agence Nationale de Valorisation de la Recherche**
**13, rue Madeleine Michelis**
**F-92522 Neuilly-sur-Seine (FR)**

(72) Inventeur: **Pegourie, Jean-Pierre**
**49, Faubourg Saint-Jaumes Bât. E**
**F-34000 - Montpellier (FR)**

(74) Mandataire: **Ores, Irène**
**CABINET ORES 6, Avenue de Messine**
**F-75008 - Paris (FR)**

Courier Press, Leamington Spa, England.

## Dispositif moteur et/ou frein pas à pas

L'invention est relative à un dispositif moteur et/ou frein pas à pas, c'est-à-dire à un dispositif qui répond à un mouvement de translation commandée, en fournissant ou en permettant un mouvement de rotation; de façon plus précise, dans le dispositif selon la présente invention, ladite translation commandée est l'un d'une suite de mouvements alternatifs en va-et-vient, mouvement qui produit ou permet une fraction de rotation qui est discontinue. En particulier, mais non exclusivement, la présente invention s'applique à un moteur on frein pas à pas, c'est-à-dire à un moteur qui répond, à un ordre qui produit une translation complète (d'aller ou de retour), en fournissant ou en permettant une rotation partielle, de grandeur invariable et de sens invariable.

Le Brevet belge No. 432 413 du 27 Janvier 1939, au nom de la Société Liégoise d'Estampage, fait connaître des dispositifs de transformation de mouvement, rectiligne alternatif en mouvement rotatif discontinu, lesquels comportent un corps pourvu de saillies décalées l'une par rapport à l'autre dans des plans différents, et un second corps présentant à ses extrémités des rampes de profil, nombre et pas appropriés, les deux corps étant disposés l'un par rapport à l'autre de telle manière que l'un des deux étant soumis à un mouvement rectiligne alternatif, le contact réciproque des saillies et des rampes correspondantes lui imprime un mouvement de rotation discontinu dont l'amplitude dépend du profil de ces dernières. Toutefois, le corps pourvu de rampes de ce dispositif fait partie d'une bobine selfique excitée par un faible courant, ces qui peut représenter un inconvénient non négligeable dans la pratique, de même que le glissement des galets sur les rampes en V, qui est à l'origine de frottements générateurs de pertes de puissance.

Le mécanisme d'indexation décrit dans le Brevet britannique 1 423 522 comprend deux profils de came opposés fixés à un corps, et une goupille de poussée qui peut se déplacer suivant un mouvement alternatif dans un parcours fixe entre les profils de came avec lesquels elle s'engage successivement et qui comportent une série de dents espacées à intervalles égaux. Toutefois, un tel mécanisme n'est pas propre à résoudre le problème posé conformément à la présente invention en raison de sa structure, qui n'est pas co-axiale.

La Demande de Brevet allemand 2 358 680 décrit un moteur pas-à-pas; toutefois ce moteur comporte des couronnes et des plateaux qui portent des dentures conjuguées qui coopèrent entre elles, produisant ainsi des frottements générateurs de pertes importantes.

La présente invention a en conséquence pour but de pourvoir à un dispositif de rotation par translation commandée, qui satisfait bien aux nécessités de la pratique, notamment en ce qu'il fonctionne sans aléas, en ce qu'il peut être réalisé sans requérir une grande précision d'exécution des pièces qui le composent, et en ce que l'application du mouvement de translation qui le commande produit ou permet à coup sûr la rotation partielle de la grandeur prévue et du sens prévu.

Le dispositif conforme à l'invention susceptible de fonctionner pas-à-pas comprend deux équipages dont l'un, dit "premier équipage" comprend au moins deux couronnes annulaires dont les faces en regard comportent des dentures formées de cavités consécutives et identiques entre elles, l'autre équipage dit "second équipage" comprenant au moins un galet susceptible de coopérer par contact mutuel avec lesdites dentures, l'ensemble desdits deux équipages permettant, par la combinaison d'un mouvement de translation alternatif en va-et-vient, communiqué de l'extérieur à l'un des équipages, de fournir ou de permettre un mouvement de rotation pas-à-pas de l'autre équipage et, par voie de conséquence, aux moyens de sortie du dispositif, lequel est caractérisé en ce que le mouvement de translation alternatif en va-et-vient est communiqué audit premier équipage et que c'est ledit second équipage qui est animé d'un mouvement de rotation pas-à-pas, fournissant, au choix, aux moyens de sortie, soit un couple moteur soit un couple résistant, ceci au cas où lesdits moyens de sortie seraient euxmêmes soumis à un couple moteur venant de l'extérieur, le dispositif selon l'invention étant encore caractérisé en ce que lesdits deux équipages sont tous deux de révolution, qu'ils possèdent un arbre commun et que le mouvement de translation alternatif en va-et-vient dudit premier équipage s'effectue selon un axe parallèle à cet arbre, ledit équipage restant bloqué en rotation, alors que le mouvement de rotation communiqué par ce même équipage audit second équipage s'effectue autour du même arbre, ledit second équipage étant bloqué en translation parallèlement audit arbre, le dispositif selon l'invention étant encore caractérisé en ce que les cavités que comportent les couronnes annulaires présentent des surfaces dont chacune est l'enveloppe d'un volume sensiblement égal à celui d'un galet dont la grande base roule sur une ligne cylindrique qui forme un creux en forme de V, le dispositif selon l'invention étant encore caractérisé en ce que la forme en V du pourtour de chaque cavité est totalement dissymétrique, avec un jambage parallèle audit arbre et avec l'autre jambage comprenant au moins une partie externe faisant avec ledit arbre un angle inférieur à environ 60° et, de préférence, égal à environ 30° et pouvant comprendre une partie interne parallèle audit arbre, le dispositif selon l'invention étant encore caractérisé en ce que ledit second équipage comprend au moins deux jeux de galets indentiques et radialement équidistants dont le nombre, par jeu, est un sous-multiple du nombre des cavités ou lui est égal, avec un décalage angulaire d'une demi-cavité, ce décalage étant prévu entre lesdites deux couronnes annulaires, ou bien entre les deux jeux de galets, ou bien encore entre lesdites deux couronnes et, le complément, entre lesdits deux jeux de galets, ceci, avec des moyens de commande faisant coulisser dans un mouvement alternatif de va-et-vient ledit premier équipage et avec des moyens de sortie auxquels ledit second équipage imprime un mouvement de rotation, ledit mouvement de translation faisant rouler ledit galet sur ladite cavité jusqu'au fond de la forme en V, ce qui fournit précisément le mouvement de rotation désiré.

Il est précisé que ledit ou lesdits galets peuvent être cylindriques, ou peuvent être tronconiques (avec le sommet du cône sur ledit arbre).

Selon un mode de réalisation du dispositif qui fait l'objet de la présente invention, l'équipage comprenant au moins une couronne, est monté coulissant le long de l'arbre, et l'équipage comprenant au moins un galet, est monté tournant autour de l'arbre; l'équipage coulissant comprend deux couronnes annulaires, dont les faces en regard portent chacune une pluralité de cavités, identiques et consécutives; le V de la ligne cylindrique de chaque cavité est totalement dissymétrique, avec un jambage parallèle audit arbre et avec l'autre jambage comprenant au moins une partie externe faisant avec ledit arbre un angle inférieur à environ 60°, et de préférence égal à environ 30° et pouvant comprendre une partie interne parallèle audit arbre; l'équipage tournant comprend de préférence deux jeux de galets identiques et radialement équidistants, dont le nombre par jeu est un sousmultiple du nombre des cavités d'une couronne ou lui est égal (bien entendu la structure inverse est possible, avec quelques cavités espacées et équidistantes ou même une seule cavité par couronne, et avec une pluralité de galets espacés d'une cavité); un décalage angulaire d'une demi-cavité est prévu entre les deux couronnes annulaires, ou entre les deux jeux de galets, ou partie entre les deux couronnes et le complément entre les deux jeux. Ce dispositif peut encore comprendre, selon la présente invention, d'une part des moyens d'entrée de la translation commandée, et d'autre part des moyens de sortie de la rotation de l'équipage à galets: on obtient ainsi un dispositif moteur et/ou frein pas à pas.

Un autre mode de réalisation du dispositif qui fait l'objet de la présente invention concerne le montage des galets sur l'équipage tournant: au lieu d'un montage fixe, ce montage comprend, pour chacun des deux jeux de galets, un ressort, qui pousse les galets de ce jeu à une distance choisie par rapport à l'équipage tournant et dans le sens de rotation de l'équipage tournant, mais qui permet aux galets de ce jeu de se rapprocher d'environ un demi-pas de l'équipage tournant (lorsque ces galets portent sur les jambages parallèles à l'arbre du V).

Comme décrit en détail plus loin, le dispositif selon la présente invention interdit tout fonctionnement intempestif sous l'action d'un couple moteur tendant à faire tourner en avant ou en arrière l'équipage tournant. Toutefois, un couple moteur tendant à faire tourner en avant l'équipage tournant peut, en surpassant le ressort d'un jeu de galets, faire avancer, en position de repos, l'équipage tournant d'un demi-pas. Si l'on désire éviter cette avance, il suffit, selon la présente invention, de prévoir une roue libre sans jeu sur l'arbre de sortie.

Le moteur pas à pas selon la présente invention, peut être utilisé comme frein pas à pas. De façon plus détaillée lorsqu'un couple moteur est appliqué à l'équipage tournant, il le fait tourner d'un demi-pas à chaque coulissement de l'équipage coulissant (à condition bien entendu que ledit couple moteur suprasse ledit ressort du jeu de galets); on remarquera que, comme décrit en détail plus loin, en passant du fonctionnement en moteur pas à pas au fonctionnement en frein pas à pas l'inversion du couple de l'équipage tournant entraîne l'inversion de son sens de rotation, ou bien exige la réversion des ressorts des jeux de galets.

En conséquence, encore une autre disposition selon la présente invention, consiste à rendre réversibles, sous commande, lesdits deux ressorts des jeux de galets: le même moteur est alors apte à fonctionner en moteur pas à pas ou en frein pas à pas.

Les moyens d'entrée susdits de la translation peuvent être une paire de poussoirs, et alors le dispositif est actionné manuellement ou mécaniquement, ou une paire de vérins, par exemple pneumatiques, et alors on obtient un dispositif pneumatique pas à pas, ou une paire de solénoides, et alors on obtient un dispositif électrique pas à pas. Les moyens de sortie susdits de la rotation obtenue peuvent être un arbre attaqué par engrenages irréversibles depuis l'équipage à galets, ou deux tels arbres tournant en sens opposés, on deux paires de tels arbres avec des rapports d'engrenages pouvant être différents d'une paire à l'autre.

Outre les dispositions qui précèdent, l'invention comprend encore d'autres dispositions, qui ressortiront de la description qui va suivre.

L'invention vise plus particulièrement les dispositifs de rotation par translation commandée conformes aux dispositions qui précèdent, ainsi qui les moyens propres à la réalisation de ces dispositifs et les installations dans lesquelles ces dispositifs sont inclus, notamment les installations pneumatiques, d'automatique ou de servo-commande, par exemple.

L'invention pourra être mieux comprise à l'aide du complément de description qui va suivre, qui se réfère aux dessins annexés dans lesquels:

— les figures 1, 2, 3 sont trois figures développées de la ligne cylindrique, avec une seule cavité et un seul galet, en trois phases opérationnelles successives, qui illustrent le principe de l'invention et son mode de réalisation décrit ci-dessus;

— les figures 4, 5, 6 sont trois figures développées de la ligne cylindrique, avec une pluralité de cavités et une pluralité de galets, en trois phases opérationnelles successives, qui illustrent le principe d'un autre mode de réalisation de l'invention, défini plus haut;

— la figure 7 est une vue en couple axiale, selon la ligne VII—VII de la figure 8, d'un dispositif pas à pas à commande mécanique selon un autre mode de réalisation de l'invention, défini plus haut;

— la figure 8 est une vue en coupe transversale, selon la ligne VIII—VIII de la figure 7;

— la figure 9, analogue à la figure 7, est une vue en coupe axiale en deux variantes, d'un dispositif pneumatique pas à pas selon un autre mode de réalisation de l'invention, défini plus haut;

— la figure 10, analogue à la figure 7, est une vue en coupe axiale d'un dispositif électrique pas à pas selon la présente invention;

— la figure 11, analogue à la figure 7, est une vue en coupe axiale d'un dispositif pas à pas avec quatre arbres de sortie selon la présente invention;

— les figures 12, 13, 14 et 15 sont quatre figures développées de la ligne cylindrique, avec une pluralité de cavités et avec un galet de chaque, jeu en quatre phases opérationnelles successives, qui illustrent le principe d'un dispositif pas à pas selon la présente invention;

— les figures 16, 17, 18 et 19, analogues aux figures 12 à 15, illustrent de même, un dispositif moteur-frein pas à pas selon la présente invention;

— les figures 20 et 21 sont des vues en coupe montrant un ressort réversible, et sa commande, selon la présente invention, et

— la figure 22 est une vue en coupe normale à l'axe, et la

— figure 23 est une vue en coupe axiale, d'un mode d'exécution avantageux du dispositif moteur-frein pas à pas selon la présente invention.

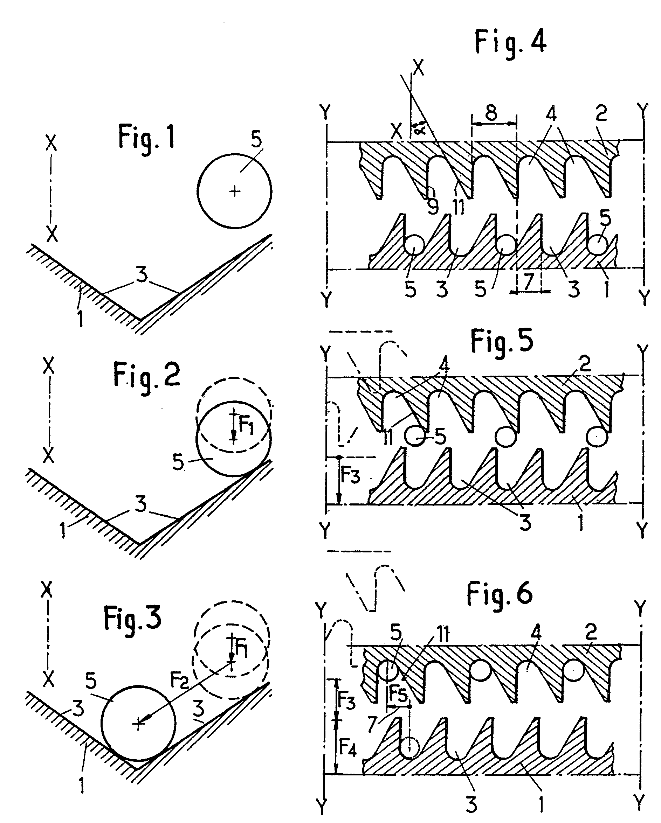

Les figures 1, 2, 3, sont trois figures, en trois phases opérationnelles successives, de la ligne cylindrique, supposée fendue le long d'une génératrice parallèle à l'axe général XX et développée à plat, de la couronne annulaire 1, avec une cavité 3 en forme de V, qui peut être symétrique comme représenté, et qui coopère avec un galet 5. Bien entendu, seuls comptent les mouvements relatifs de la couronne 1 et du galet 5, et ce n'est que pour la simplicité de l'exposé que l'on donnera ici pour fixe la couronne 1. Sur la figure 1, le galet 5 est en dehors de la cavité 3. Si l'on enfonce (ou tire) l'arbre du galet 5, le galet 5 descend (flèche F1) au contact de la cavité 3 (figure 2), puis le galet 5 roule sur un jambage du V de la cavité et s'arrête au fond de la cavité 3 (figure 3): ainsi, l'arbre portant le galet 5 a été amené dans une position angulaire prédéterminée que l'on peut régler en réglant la position angulaire de la couronne 1. Il est évident qu'en employant plusieurs cavités 3 dans la couronne 1, et/ou deux couronnes 1 symétriquement placées mais décalées, on peut obtenir une pluralité de telles positions préréglées. Il est également évident, que l'arbre portant le galet 5 pourrait ne pas coulisser sur lui-même, et que sa ou ses positions angulaires prédéterminées seraient alors obtenues en tirant (ou poussant) la ou les couronnes 1 parallèlement à l'axe général XX. De telles structures permettent la libre rotation d'un arbre et sa mise en positions angulaires prédéterminées.

Les figures 4, 5, 6, sont analogues aux précédentes figures 1, 2, 3, et concernent un autre mode de réalisation défini plus haut. L'équipage coulissant en va-et-vient le long de l'arbre d'axe XX comprend deux couronnes 1 et 2, couronnes qui sont munies chacune d'une pluralité de cavités 3 et 4, cavités qui sont identiques entre elles et qui sont consécutives sur chaque couronnes, les deux couronnes 1 et 2 étant symétriques et étant, entre elles, décalées angulairement de la moitié 7 d'une largeur de cavité ou pas 8. Les cavités 3 et 4 sont ici en forme de V totalement dissymétrique, c'est-à-dire avec un jambage ou face 9 parallèle à l'axe généfal XX et avec l'autre jambage ou face 11 faisant un angle $\alpha$ (figure 4) avec l'axe général XX: cet angle $\alpha$ est inférieur à environ 60°; il est de préférence égal à 30° environ. Les galets tronconiques 5 sont ici en nombre moitié du nombre des cavités 3 de la couronne 1 (ou 4 de la couronne 2), mais ils pourraient être en nombre égal, ou en un autre nombre sous-multiple ou égal à 1, comme déjà énoncé et évident, ainsi que la disposition inverse de ces deux nombres. Le fonctionnement est équivalent à celui déjà décrit à propos des figures 1, 2, 3; les galets 5 étant au fond des cavités 3 de la couronne 1 (figure 4), une translation vers le bas des couronnes 1 et 2 (flèche F3 de la figure 5) amène les faces 11 des cavités 4 de la couronne 2 au contact des galets 5, puis (flèche F4 de la figure 5) fait rouler ces galets 5 sur les faces 11, ce qui produit la rotation désirée d'un demi-pas 7 selon la flèche F5. Lorsque se produira le mouvement inverse (vers le haut) des couronnes 1 et 2, les galets 5 tourneront encore d'un demi-pas 7, mais toujours dans le sens de la flèche F5. On constate ainsi que l'invention réalise bien un dispositif répondant à une translation commandée (égale à F3+F4 ou opposée à F3+F4) par une rotation toujours égale (à un demi-pas 7) et de même sens (selon la flèche F5), c'est-à-dire un dispositif pas à pas.

Un tel dispositif pas à pas selon l'invention est muni de moyens d'entrée de la translation commandée et de moyens de sortie de la rotation obtenu.

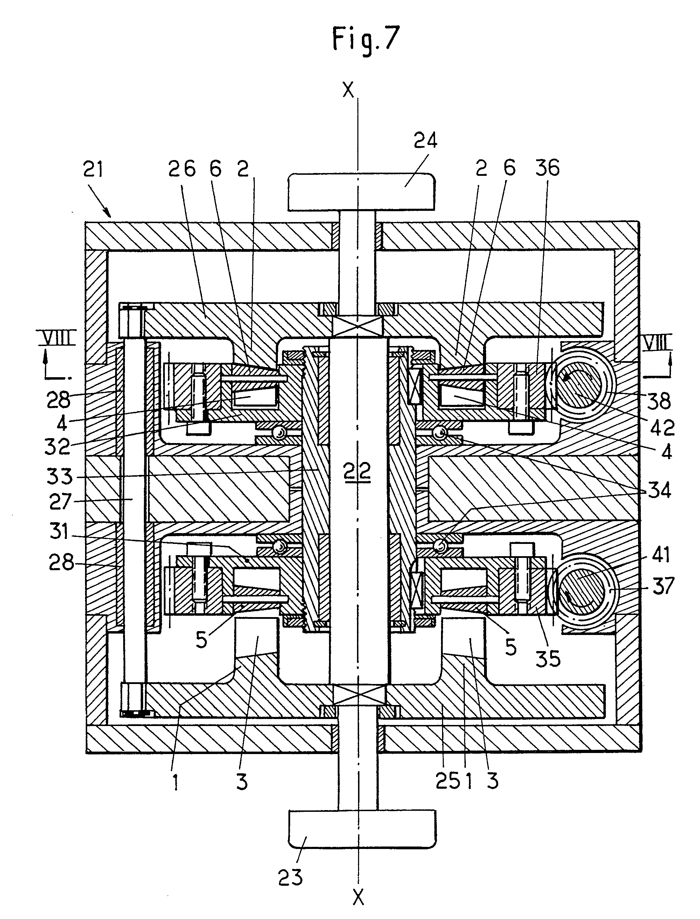

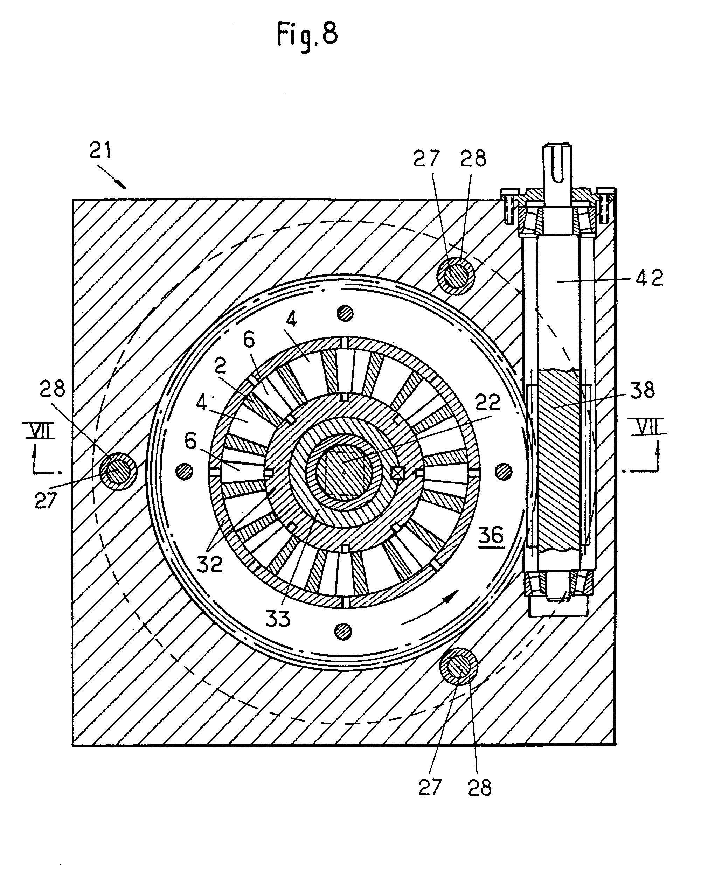

Les figures 7 et 8 représentent, un coupes axiale et transversale, un tel moteur pas à pas, à commande mécanique, conforme au mode de réalisation selon les figures 4, 5, 6, de la présente invention. On y retrouve les deux couronnes 1 et 2 et leurs cavités 3 et 4, les galets tronconiques étant toutefois symétriquement dédoublés en 5 et 6 (figure 7). D'autre part: dans un boîtier 21, de forme cylindrique à base carrée autour de l'axe XX, coulisse l'arbre 22, d'axe XX, qui porte deux poussoirs extérieurs 23 et 24 deux plateaux 25 et 26, portant respectivement les couronnes 1 et 2; l'ensemble 1, 2, 22, 23, 24, 25, 26, constitue l'équipage coulissant; il est guidé et bloqué en rotation, par exemple par des pions solidaires du boîtier (non représentés) ou par trois entretoises 27 reliant les plateaux 25 et 26 et coulissant dans des douilles à billes 28, ou par un moyen équivalent, L'équipage tournant comprend deux plateaux 31 et 32, entretoisés par une douille 33, entourant l'arbre 22 et tournant dans le botier 21 sur des roulements de butée à billes 34; les plateaux 31 et 32, qui portent respectivement les galets tronconiques 5 et 6, portent en outre chacun une couronne dentée amovible, 35 et 36, qui présente la forme d'une vis irréversible, et dont chacune engrène avec une roue dentée respectivement 37 et 38, calée sur un abre de sortie, 41 et 42 (figure 8): ce moteur est ainsi doté de deux arbres de sortie, tournant pas à pas en sens opposés, ce qui est souvent désirable ou même nécessaire.

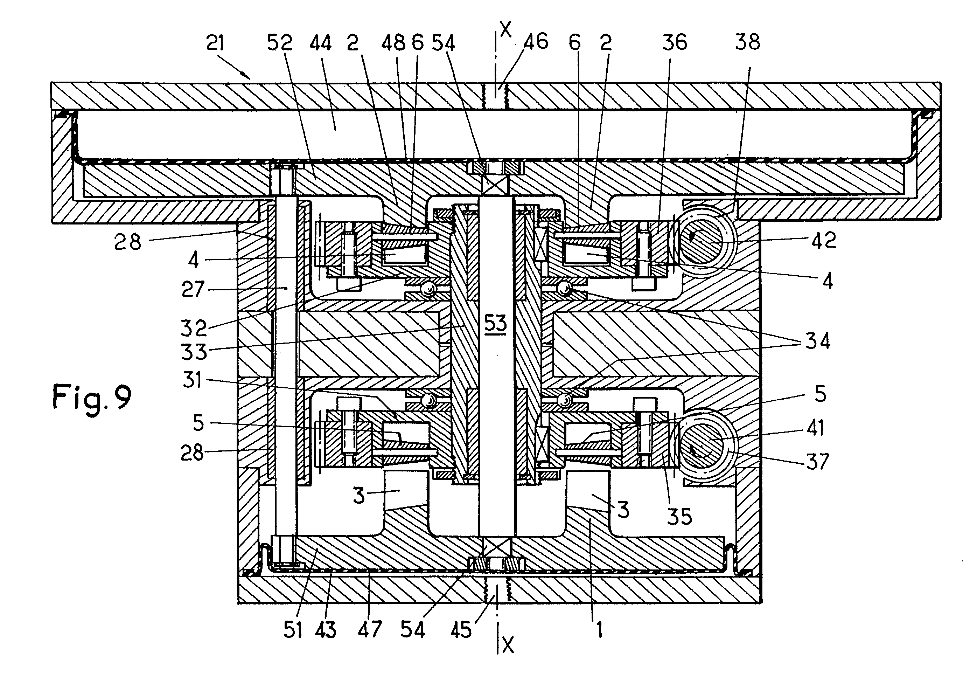

La figure 9 et la même figure 8 représentent, en coupes axiale et transversale, un moteur pas à pas, à commande pneumatique, conforme au mode de réalisation selon les figures 4, 5, 6, de la présente invention. On y retrouve les deux couronnes 1 et 2 avec leurs cavités 3 et 4, les galets tronconiques 5 et 6, les entretoises 27 avec leurs douilles 28, et l'équipage tournant 31, 32, 33, 34, 35, 36, avec ses sorties 37, 38, 41, 42. Il y a lieu de préciser que ces deux sorties 37—38, 41—42 tournent en sens inverse avec le même rapport. Le boîtier 21 forme en ses extrémités deux cylindres pneumatiques 43 et 44, avec raccords filetés 45 et 46, avec deux membranes élastiques 47 et 48, actionnant alternativement deux pistons 51 et 52. Les deux pistons 51 et 52, qui portent respectivement les couronnes 1 et 2, sont solidarisés par l'arbre 53, d'axe XX, à carrés 54, et par lesdites entretoises 27.

Comme représenté sur la partie superieure de la figure 9, on peut, pour des questions de choix et/ou d'opportunité, majorer la grandeur de la partie pneumatique: le boîtier 21 est élargi à ses deux extrémités, pour loger des pistons 51 et 52 de plus grand diamètre, ainsi bien entendu que les membranes élastiques 47 et 48, ce diamètre étant librement choisi, ce qui permet d'utiliser une pression d'alimentation moindre et/ou d'obtenir une force de translation majorée, d'où sur les sorties, en couple de rotation majoré.

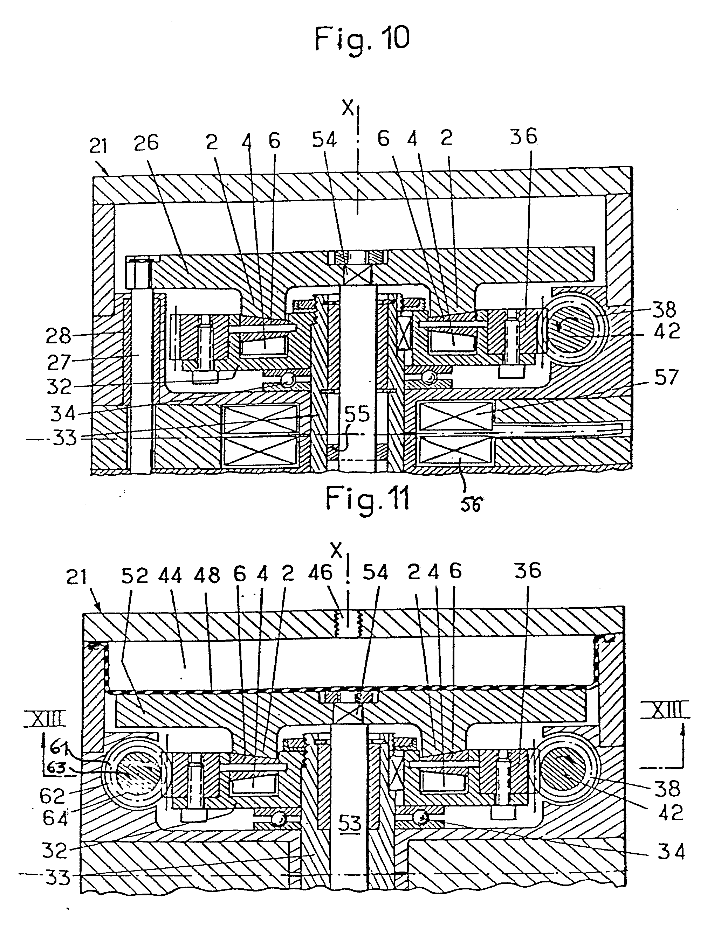

La figure 10 représente, en coupe axiale, un moteur électrique pas à pas selon la présente invention. L'arbre 53 porte une bague 55, en fer doux, qui est attirée alternativement par l'un et l'autre de deux solénoïdes 56 et 57 disposés symétriquement dans le boîtier 21, la douille 33 étant en métal non magnétique. Bien entendu, ce système moteur électrique 55, 56, 57, peut être remplacé par tout système moteur électrique connu.

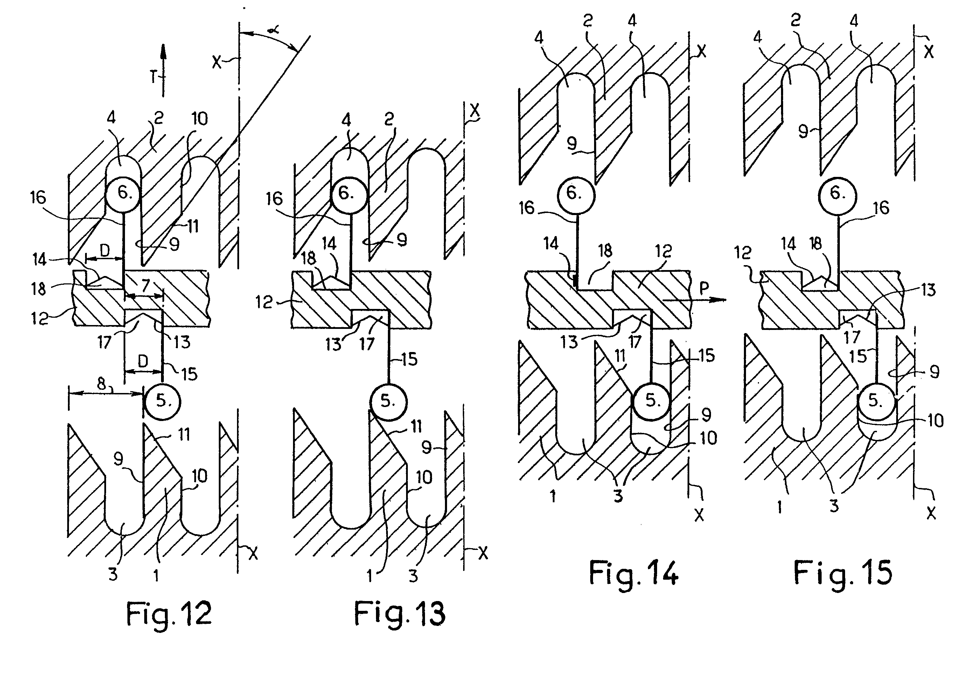

La figure 11 représente, en coupe axiale, un moteur pneumatique pas à pas, selon la présente invention, muni de quatre arbres de sortie: chaque couronne dentée 35 et 36, qui présente la forme d'une vis irréversible, engrène avec des roues dentées 37 et 61, 38 et 62, calées sur des arbres de sortie, 41 et 63, 42 et 64. Chaque couronne dentée 35, 36 peut comporter deux arbres de sortie à réduction différente et tournant dans le même sens. Bien entendu, les pas des dentures des couronnes 37 et 61, 38 et 62 peuvent être différents, et, selon l'invention, ce moteur (pneumatique ou autre) entraîne ainsi des sorties pas à pas, par paires de même pas et de sens opposés et avec des pas différents d'une paire à l'autre paire.

La surface gauche des couronnes 1 et 2 à cavités 3 et 4 peut être réalisée par fraisage, en rectifiant une fraise à la forme du galet tronconique et à ses dimensions (compte tenu des tolérances et jeux); selon l'invention, ces couronnes sont de préférence obtenues par matriçage ou par forgeage.

Le poids de l'équipage coulissant est suffisamment faible pour que les frottements suffisent à maintenir cet équipage dans la position de fin de course où il a été envoyé par une impulsion pneumatique de commande. Cet équipage peut toutefois être muni d'un dispositif de maintien, tel qu'un ressort tronconique reversible ou autre équivalent, selon des questions de choix ou d'opportunité, par exemple en cas de fortes vibrations et/ou accélérations.

Les figures 12, 13, 14 et 15, représentent une partie des couronnes 1 et 2 d'un autre mode de réalisation, leur surface cylindrique étant fendue le long d'une génératrice parallèle à l'axe général XX et développée à plat; leurs dentures sont symétriques et symétriquement placées en regard l'une de l'autre; leurs cavités 3 et 4 sont en forme de V dissymétrique, c'est-à-dire avec un jambage 9 parallèle à l'axe XX et avec un jambage en partie 10 parallèle à l'axe XX et en partie 11 faisant un angle $\alpha$ avec l'axe XX. L'équipage tournant 12 comporte deux jeux de galets tronconiques 5 et 6 (les figures ne représentent qu'un seul galet 5 et un seul galet 6); les galets d'un même jeu sont tenus dans une cage 15 ou 16 (représentée symboliquement par un trait), mobile dans un logement 17 ou 18 de l'équipage tournant 12; ces deux logements 17 et 18 sont décalés entre eux d'un demipas 7, chacun d'eux a une longueur D au moins égale à un demi-pas 7 et est muni d'un ressort 13 ou 14 poussant la cage 15 ou 16 et les galets 5 ou 6 en avant dans le sens de rotation de l'équipage tournant 12 (de gauche à droite sur les figures 12 à 15, flèche P).

La figure 12 représente le dispositif dans l'un de ses deux états repos: le galet 6 est au fond d'une cavité 4 de la couronne 2, le galet 5 est libre, le ressort 14 tient le galet 6 en avant, et de la distance D, de l'équipage tournant 12. Lorsque l'équipage tournant 12 descend ou lorsque les couronnes 1 et 2 montent (flèche T), le galet 6 roule le long du jambage 9, parallèle à l'axe XX, et l'équipage tournant 12 ne tourne pas. Ensuite (figure 13), le galet 5 vient porter sur la partie oblique 11 d'une cavité 3 de la couronne 1:ceci fait avancer l'équipage tournant 12 d'un demi-pas 7, en comprinant (figure 14) le ressort 14 du galet 6. Enfin, le galet 5 descend entre la partie droite 10 et le jambage 9 de la cavité 3, le galet 6 abandonnat la cavité 4:ce qui détend son ressort 14 (figure 15); ceci est l'autre état repos du dispositif.

On remarquera, sur les figures 12 à 15, que l'équipage tournant 12 ne peut en aucun cas reculer intempestivement. Il pourrait par contre avancer d'un demi-pas sous l'action d'une force extérieure qui comprimerait le ressort 13 ou 14 d'un jeu de galets tronconiques. Pour prévenir cette avance, la présente invention prévoit une roue libre sans jeu sur l'arbre de sortie.

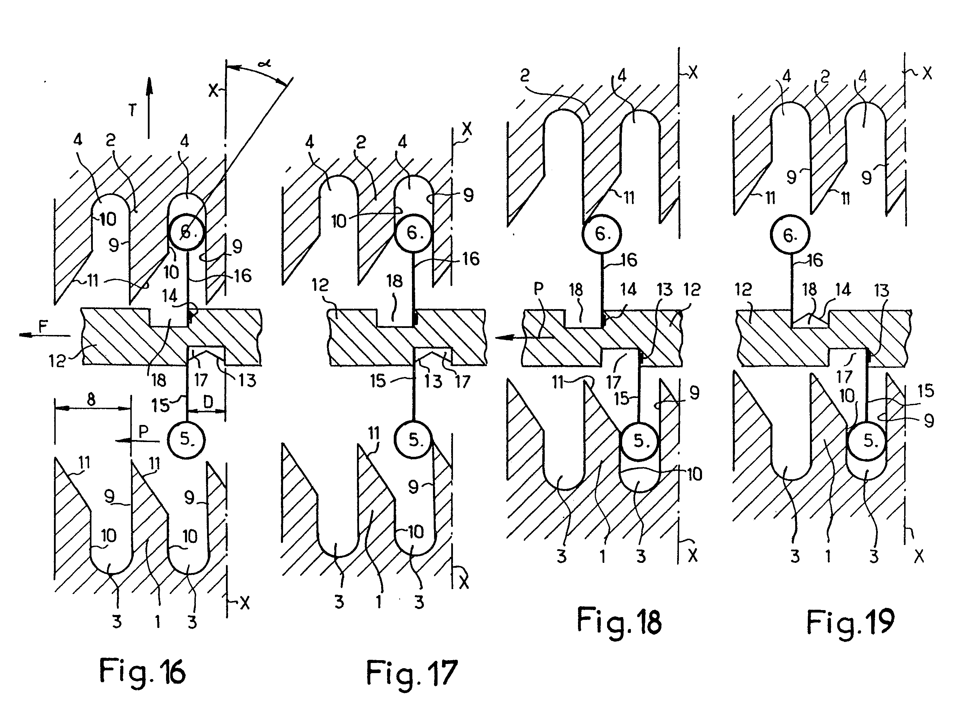

Les figures 16 à 19 sont analogues aux figures 12 à 15, mais concernent un dispositif frein selon la présente invention; l'équipage tournant subit un couple moteur (flèche F, de droite à gauche sur les figures 16 à 19) et tourne dans le sens imposé par ce couple (flèche P, de droite à gauche). On retrouve sur les figures 16 à 19 les mêmes organes, avec les mêmes références, que sur les figures 12 à 15; toutefois, comme déjà énoncé, les ressorts 13 et 14 sont réversés, et maintenant ils poussent les cages 15 et 16 vers la gauche des figures, dans le sens des flèches F et P.

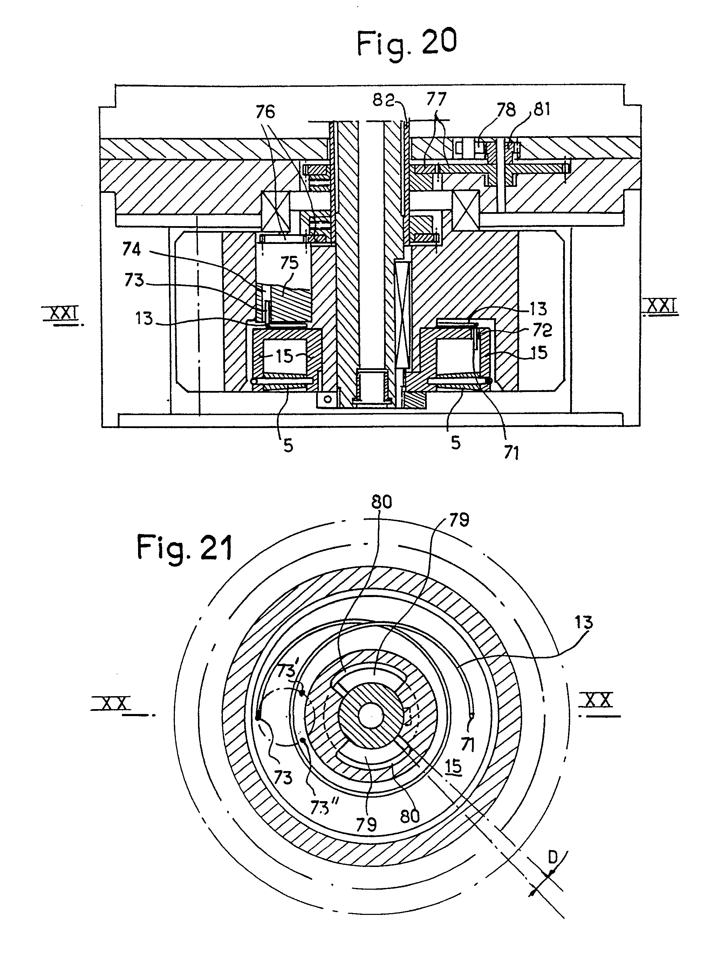

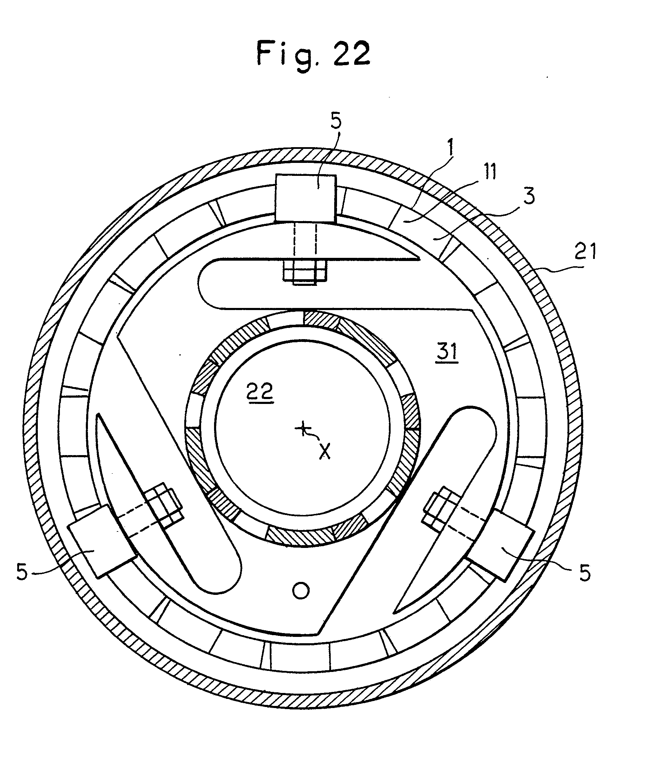

Les figures 20 et 21 représentent une exécution du ressort réversible 13 (ou 14) selon la présente invention: dans cette exécution, ce ressort réversible 13 est du type spiral à une spire et demie, comme visible sur la figure 21; à l'une de ses extrémités, un rabat de bout 71 est logé dans un perçage 72 de la cage 15 des galets 5; à l'autre extrémité, un rabat de bout 73 est logé dans un perçage 74 d'une douille 75. Cette douille 75 peut tourner sur elle-même à partir de la position neutre (représentée aux figures 20 et 21) sous l'action d'un renvoi d'engrenages à deux étages 76 et 77 (figure 20), ce dernier étant commandé depuis l'extérieur par une crémaillère 78 qui engrène avec le pignon 81, lui-même solidaire de l'étage 77. La crémaillère 78 transmet le mouvement de rotation à l'étage 77 qui est solidaire d'un tube 82 coaxial avec l'étage 76 qui transmet le mouvement à la douille 75. En actionnant cette crémaillère 78 dans un sens ou dans l'autre, la douille 75 tend ou détend le ressort réversible 13, dont elle amène le rabat 73 dans l'une des deux positions 73' ou 73" (figure 21), cette position étant maintenue par l'action de ressort lui-même. Comme déjà indiqué, la cage 15 des galets 5 est montée sur l'équipage tournant 12 avec un jeu angulaire D, ménagé (figure 21) entre tétons 79 et encoches 80; il en est de même pour l'autre cage 16 des galets 6; il y a lieu de préciser à cet égard qu'une crémaillère 78, un pignon 81 et un étage 77 uniques entraînent deux étages 76.

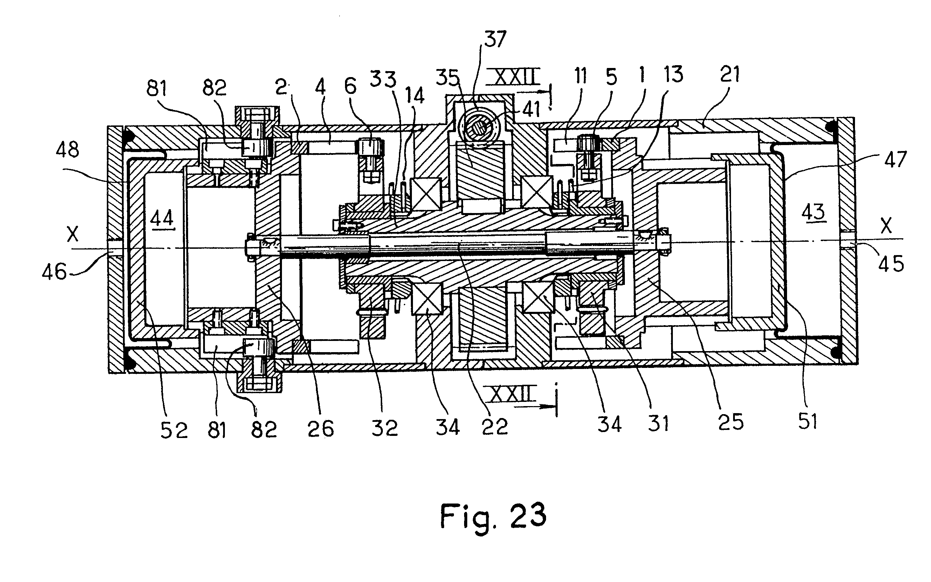

Les figures 22 et 23 représentent un mode d'exécution avantageux d'un dispositif pas à pas selon la présente invention, exécution ayant donné en fonctionnement, d'excellents résultats. On retrouve sur ces deux figures les mêmes organes, avec bien entendu les mêmes références. Dans un boîtier 21, de forme générale cylindrique autour de l'axe XX, coulisse l'arbre 22, d'axe XX, portant deux pistons 51 et 52, pour lesquels le boîtier 21, avec deux membranes élastiques 47 et 48, forme deux cylindres pneumatiques 43 et 44, avec raccords pneumatiques 45 et 46; l'arbre 22 porte lesdits pistons 51 et 52 par l'intermédiaire de deux plateaux 25 et 26, munis d'encoches longitudinales 81 où roulent des galets 82 qui facilitent et guident le coulissement (sans rotation) de l'arbre 22; les plateaux 25 et 26 portent les couronnes 1 et 2 à cavités 3 et 4. L'équipage tournant comprend une douille 33, tournant dans le boîtier 21 sur des roulements de butée 35 et portant une roue dentée irréversible 35 engrenant avec un pignon 37 calé sur l'arbre de sortie 41 monté dans le boîtier 21; sur la douille 33 sont montés deux plateaux 31 et 32; chaque plateau 31 ou 32 est monté sur la douille 33 avec un jeu angulaire D au moins égal à un demi-pas 7 et il est muni d'un ressort spiral 13 ou 14 travaillant à la traction ou à la compression (dans cette exécution, les ressorts 13 et 14 ne sont pas réversibles, mais bien entendu, ils pourraient être réversibles comme déjà décrit à propos des figures 20 et 21); chaque plateau 31 ou 32 porte trois galets 5 ou 6, qui sont cylindriques: en conséquence, les flancs 11 (obliques sur l'axe XX) des cavités 3 et 4 sont des surfaces hélicoïdales.

Il résulte de la description qui précède que, quels que soient les modes de réalisation et d'application adoptés, l'on obtient, selon l'invention, des dispositifs d'actionnement qui présentent des avantages importants dont les principaux ont été mentionnés plus haut et qui apparaîtront, ainsi que d'autres avantages, au cours de l'utilisation des dispositifs conformes à l'invention.

## Revendications

1. Dispositif susceptible de fonctionner pas-à-pas, comprenant deux équipages dont l'un, dit "premier équipage" comprend au moins deux couronnes annulaires dont les faces en regard comportent des dentures formées de cavités consécutives et identiques entre elles, l'autre équipage dit "second équipage" comprenant au moins un galet susceptible de coopérer par contact mutuel avec lesdites dentures, l'ensemble desdits deux équipages permettant, par la combinaison d'un mouvement de translation alternatif en va-et-vient, communiqué de l'extérieur à l'un des équipages, de fournir ou de permettre un mouvement de rotation pas-à-pas du l'autre équipage et, par voie de conséquence, aux moyens de sortie du dispositif, lequel est caractérisé

— en ce que le mouvement de translation alternatif en va-et-vient est communiqué audit premier équipage (25, 26) et que c'est ledit second équipage (31, 32) qui est animé d'un mouvement de rotation pas-à-pas, fournissant, au choix, aux moyens de sortie (37, 38), soit un couple moteur soit un couple résistant, ceci au cas où lesdits moyens de sortie seraient eux-mêmes soumis à un couple moteur venant de l'extérieur,

— en ce que lesdits deux équipages sont tous deux de révolution, qu'ils possèdent un arbre commun (22) et que le mouvement de translation alternatif en va-et-vient dudit premier équipage s'effectue selon un axe parallèle à cet arbre, ledit équipage restant bloqué en rotation, alors que le mouvement de rotation communiqué par ce même équipage audit second équipage s'effectue autour du même arbre (22), ledit second équipage étant bloqué en translation parallèlement audit arbre (22),

— en ce que les cavités (3, 4) que comportent les couronnes annulaires (1, 2) présentent des surfaces dont chacune est l'enveloppe d'un volume sensiblement égal à celui d'un galet tel que 5 dont la grande base roule sur une ligne cylindrique qui forme un creux en forme de V,

— en ce que la forme en V due pourtour de chaque cavité est totalement dissymétrique, avec un jambage (9) parallèle audit arbre et avec l'autre jambage (11) comprenant au moins une partie externe faisant avec ledit arbre un angle inférieur à environ 60° et, de préférence, égal à environ 30° et pouvant comprendre une partie interne parallèle audit arbre,

— et en ce que ledit second équipage comprend au moins deux jeux de galets (tels que 5) identiques et radialement équidistants dont le nombre, par jeu, est un sous-multiple du nombre des cavités ou lui est égal, avec un décalage angulaire d'une demi-cavité, ce décalage étant prévu entre lesdites deux couronnes annulaires, ou bien entre les deux jeux de galets, ou bien encore entre lesdites deux couronnes et, le complément, entre lesdits deux jeux de galets, ceci, avec des moyens de commande faisant coulisser dans un mouvement alternatif de va-et-vient ledit premier équipage et avec des moyens de sortie (37, 38) auxquels ledit second équipage imprime un mouvement de rotation, ledit mouvement de translation faisant rouler ledit galet sur ladite cavité jusqu'au fond de la forme en V, ce qui fournit précisément le mouvement de rotation désiré.

2. Dispositif selon la Revendication 1, caractérisé en ce que dans un boîtier (21) de forme cylindrique à base carrée autour dudit arbre, lesdits moyens de commande comprennent deux plateaux (25, 26) qui portent les deux couronnes annulaires sudites et sont solidarisés par ledit arbre avec des moyens de blocage en rotation de cet ensemble, le second équipage comprend deux plateaux entretoisés (31, 32) par une douille (33) qui entoure ledit arbre et tourne dans ledit boîtier sur des roulements de butée (34), ces deux plateaux portent chacun un jeu de galets (5, 6) et une couronne dentée (35, 36) qui présente la forme d'une vis irréversible, engrenant une roue dentée (respectivement 37, 38) solidaire d'un arbre de sortie (41, 42).

3. Dispositif selon la Revendication 2, caractérisé en ce que ledit arbre porte à chacune de des extrémités, un poussoir extérieur au boîtier.

4. Dispositif selon la Revendication 2, caractérisé en ce que ledit boîtier forme à chaque extrémité en cylindre pneumatique (43, 44), avec une membrane élastique (47, 48) dans laquel lesdits plateaux des moyens de commande servent de pistons.

5. Dispositif selon la Revendication 4, caractérisé en ce que lesdits cylindres, avec les membranes, et les plateaux-pistons, sont de diamètre plus grand que celui de la partie centrale du boîtier.

6. Dispositif selon la Revendication 2, caractérisé en ce que le boîtier contient comme moyens de commande, un système moteur électrique.

7. Dispositif selon la Revendication 6, caractérisé en ce que ledit système moteur électrique comprend d'une part une paire de solénoîdes (56, 57) logés symétriquement dans la partie centrale du boîtier autour dudit arbre, et d'autre part une bague (55) en fer doux montée sur ledit arbre.

8. Dispositif selon l'une quelconque des Revendications 2 à 7, caractérisé en ce que chaque couronne dentée (35, 36) présente la forme d'une vis irréversible qui engrène une roue dentée (36—61, 38—62) solidaire d'un arbre de sortie (41—63, 42—64), les deux couronnes dentées pouvant être de pas différents.

9. Dispositif selon l'une quelconque des Revendications 2 à 8, caractérisé en ce qu'il comprend un dispositif de maintien du premier équipage dans ses positions de fin de course, notamment un ressort tronconique réversible.

10. Dispositif selon l'une quelconque des Revendications 1 à 9, caractérisé en ce qu'il comprend une roue libre sans jeu sur l'arbre de sortie.

11. Dispositif selon la Revendication 1, caractérisé en ce qu'il comprend un boîtier (21) de forme générale cylindrique admettant l'axe XX, à l'intérieur duquel est monté le premier équipage susdit dont l'arbre (22) porte deux pistons (51, 52) pour la commande pneumatique dudit mouvement de translation alternatif en va-et-vient, ceci avec des moyens de guidage dudit mouvement, en ce que les cavités de l'une des deux couronnes du premier équipage sont décalées angulairement par rapport à celles de l'autre couronne, ce décalage étant égal à la moitié de la largeur d'une cavité, et en ce que ledit second équipage (12) comporte une douille (33) tournant dans ledit boîtier (21) et portant une roue dentée irréversible (35), laquelle engrène avec un pignon de sortie (37), deux plateaux (31, 32) étant montés sur ladite douille, chaque plateau étant ainsi monté avec un jeu angulaire au moins égal à la moitié de la largeur desdites cavités et au moyen d'un ressort (13, 14) reprenant ledit jeu angulaire, chaque plateau portant une pluralité de galets cylindriques (5, 6).

**Patentansprüche**

1. Schrittweise wirkende Einrichtung mit zwei Baugruppen, von denen die eine sie sog. "erste Baugruppe" wenigstens zwei Ringräder umfaßt, deren sich gegenüberstehende Flächen über Verzahnungen verfügen, die aus aufeinanderfolgenden und untereinander gleichen Ausnehmungen bestehen, wobei die andere Baugruppe, die sog. "zweite Baugruppe" wenigstens eine Rolle umfaßt, die in der Lage ist, durch gegenseitigen Kontakt mit den Verzahnungen zusammenzuwirken, wobei die Gesamtheit dieser Baugruppen es durch die Kombination einer alternativen hin- und hergehenden Bewegung, die einer der Baugruppen von außen erteilt wird, ermöglicht, ein schrittweise Rotationsbewegung der anderen Baugruppe und somit den Ausganseinrichtungen der Vorrichtung zu liefern oder zuzulassen, dadurch gekennzeichnet, daß die alternative Translationsbewegung des Hin- und Hergangs der ersten Baugruppe (25, 26) erteilt wird und daß die zweite Baugruppe (31, 32), die in einer schrittweisen Rotationsbewegung angetrieben wird, nach Wahl den Ausgangseinrichtungen (37, 38) entweder ein Antriebsmoment oder ein Wiederstandsmoment liefert, und dies für den Fall, daß die Ausgangseinrichtungen selbst einem von außen kommenden Antriebsmoment ausgesetzt sind,

— daß die beiden Baugruppen beides Umdrehungskörper sind, daß sie eine gemeinsame Welle (22) besitzen und daß die alternative hin- und hergehende Translationsbewegung der ersten Baugruppe entsprechend einer Achse parallel zu dieser Welle erfolgt, wobei die Baugruppe in ihrer Drehung blockiert ist, während die durch die gleiche Baugruppe der zweiten Baugruppe erteilte Rotationsbewegung um die gleiche Welle (22) erfolgt, wobei die zweite Baugruppe parallel zu dieser Welle (22) in Translation blockiert ist;

— daß die Ausnehmungen (3, 4), welche die Ringräder (1, 2) aufweisen, über Flächen verfügen, von denen eine jede die Einhüllende eines Volumens ist, das im wesentlichen gleich dem einer Rolle wie 5 ist, deren große Basis auf einer zylindrischen Linie, welche eine V-förmige Ausnehmung bildet, rollt,

— daß die V-Gestalt des Umfangs jeder Ausnehmung völlig asymmetrisch mit einem Schenkel (9) parallel zu dieser Welle ist und wobei der andere Schenkel (11) wenigstens einen äußeren Teil umfaßt, der mit der Welle einen Winkel kleiner als 60° und vorzugsweise gleich 30' bildet und einen Innenteil parallel zu dieser Welle umfassen kann,

— und daß die zweite Baugruppe wenigstens zwei Rollensätze (wie beispielsweise 5) umfaßt, die gleich sind und radial von gleichem Abstand sind, deren Zahl pro Satz ein unter Vielfaches der Anzahl der Hohlräume oder gleich dieser Anzahl, mit einer Winkelverschiebung um einen halben Hohlraum, ist, wobei die Winkelverschiebung zwischen diesen Ringrädern oder zwischen den beiden Rollensätzen oder auch zwischen den beiden Ringrädern und dem Komplement zwischen den beiden Sätzen von Rollen vorgesehn ist, und dies mit Steuerinrichtungen, die in einer alternativen Hin- und Herbewegung die erste Baugruppe zum Gleiten veranlassen und mit Ausgangseinrichtungen (37, 38), denen die zweite Baugruppe eine Rotationsbewegung erteilt, wobei die Translationsbewegung diese Rolle auf dem Hohlraum bis zum Boden der V-Form abrollen läßt, was genau die gewünschte Rotationsbewegung liefert.

2. Vorrichtung nach Anspruch 1, dadurch gekennzeichnet, daß in einem Gehäuse (21) zylindrischer Gestalt mit um diese Welle quadratischer bzw. rechteckiger Basis diese Steuereinrichtungen zwei Scheiben (25, 26) umfassen, welche die beiden genannten Ringräder tragen und über diese Welle mit den Drehblockiereinrichtungen für diese Anordnung fest sind, wobei die zweite Baugruppe zwei vermittels einer Hülse (33) zwischengesetzte Scheiben (31, 32) umfaßt, wobei die Büchse die Welle umgibt und in dem Gehäuse auf Drucklagern (34) sich dreht, wobei die beiden Scheiben jeweils einen Rollensatz (5, 6) und einen Ringzahnkranz (35, 36) tragen, der die Form einer irreversiblen Schraube hat und mit einem fest mit einer Ausgangswelle (41, 42) verbundenen gezahnten Rad (37, 38) kämmt.

3. Vorrichtung nach Anspruch 2, dadurch gekennzeichnet, daß die Welle an jedem ihrer Enden einen außerhalb des Gehäuses angeordneten Stößel umfaßt.

4. Vorrichtung nach Anspruch 2, dadurch gekennzeichnet, daß das Gehäuse an jedem Ende einen pneumatischen Zylinder (43, 44) mit einer elastischen Membran (47, 48) bildet, in welchem die Scheiben der Steuereinrichtungen als Kolben dienen.

5. Vorrichtung nach Anspruch 4, dadurch gekennzeichnet, daß die Zylinder mit den Membranen und die Scheibenkolben von einem Durchmesser sind, der größer als der des mittigen Teils des Gehäuses ist.

6. Vorrichtung nach Anspruch 2, dadurch gekennzeichnet, daß das Gehäuse als Steuereinrichtungen ein elektrisches Antriebssystem enthält.

7. Vorrichtung nach Anspruch 6, dadurch gekennzeichnet, daß dieses elektrische Antriebssystem einerseits ein Paar von Solenoiden (56, 57), die symmetrisch im mittigen Teil des Gehäuses um diese Welle gelagert sind und andererseits einen Ring (55) aus Weicheisen, der auf dieser Welle gelagert ist, umfaßt.

8. Vorrichtung nach einem der Ansprüche 2 bis 7, dadurch gekennzeichnet, daß jeder Ringzahnkranz (35, 36) die Form einer irreversiblen Schraube aufweist, die mit einem fest mit einer Ausgangswelle (41—63, 42—64) verbundenen gezahnten Rad (36—61, 38—62) kämmt, wobei die⁺Ringzahnkränze von unterschiedlichem Schritt sein könne. +=beiden.

9. Vorrichtung nach einem der Ansprüche 2 bis 8, gekennzeichnet durch eine Einrichtung, die die erste Baugruppe in ihren Wegendestellungen hält, insbesondere eine reversible Kegelfeder.

10. Vorrichtung nach einem der Ansprüche 1 bis 9, gekennzeichnet durch ein auf dieser Ausgangswelle spielfreies Rad.

11. Vorrichtung nach Anspruch 1, dadurch gekennzeichnet, daß sie ein Gehäuse (21) im wesentlichen zylindrischer Gestalt von der Achse XX umfaßt, in dessen Innerem die erste oben genannte Baugruppe gelagert ist, deren Welle (22) zwei Kolben (51, 52) für die pneumatische Steuerung der alternativen hinund hergehenden Translationsbewegung trägt, und dies mit Einrichtungen zum Führen dieser Bewegung, daß die Ausnehmungen der einen der beiden Ringräder der ersten Baugruppe bezüglich denen des anderen Ringrades versetzt sind, wobei diese Versetzung gleich der Hälfte der Breite einer Ausnehmung ist und daß die zweite Baugruppe (12) eine sich in diesem Gehäuse (21) drehende Hülse (33) umfaßt und ein irreversibles Zahnrad (35) trägt, welches mit einem Ausgansritzel (37) kämmt und wobei zwei Scheiben (31, 32) auf dieser Hülse gelagert sind und jede so mit einem Winkelspiel wenigstens gleich der Hälfte der Breite dieser Ausnehmungen gelagert ist und mittels wenigstens einer Feder (13, 14) das Winkelspiel aufnimmt, wobei jedge Scheibe eine Vielzahl zylindrischer Rollen (5, 6) trägt.

12. Vorrichtung nach Anspruch 11, dadurch gekennzeichnet, daß jede der beiden genannten Federn unter der Wirkung einer Steuerung reversibel ist.

**Claims**

1. A device capable of operating step-by-step, comprising two apparatuses of which the one, called "first apparatus" comprises at least two annular rings of which the adjacent faces comprise teeth formed by consecutive cavities which are identical to one another, the other apparatus, called the "second apparatus" comprising at least one roller adapted to co-operate by mutual contact with said teeth, the assembly of said two apparatuses permitting, by the combination of an alternating reciprocating translation movement, communicated from the outside to one of the apparatus, a step-by-step rotational movement of the other apparatus to be effected or permitted and, in consequence to appear at the output means of the device, which is characterised in that the alternating reciprocating translation movement is communicated to said first apparatus (25, 26) and that it is said second apparatus (31, 32) to which a step-by-step rotational movement is imparted, supplying, selectively, to the output means (37, 38), either a driving torque or a resisting torque, this in the case where said output means are themselves subjected to a driving torque coming from the outside, in that said two apparatuses are both of revolution, that they have a common shaft (22) and that the alternating reciprocating translation movement of said first apparatus is effected along an axis parallel to this shaft, said apparatus remaining locked against rotation, while the rotational movement communicated by this same apparatus to said second apparatus is effected about the same shaft (22), said second apparatus being locked against translation parallel to said shaft (22), in that the cavities (3, 4) comprised by the annular rings (1, 2) have surfaces each of which is the envelope of a volume substantially equal to that of a roller such as 5, the large base of which rolls on a cylindrical line which forms a V-shaped hollow, in that the V-shape of the periphery of each cavity is totally asymmetrical, with one side (9) parallel to said shaft and with the other side (11) comprising at least one external portion forming an angle less than about 60° with said shaft and preferably equal to about 30°, and which may comprise an internal portion parallel to said shaft, in that said second apparatus comprises at least two sets of identical rollers (such as 5) which are radially equidistant and of which the number, in each set, is a submultiple of the number of cavities or is equal thereto, with an angular offsetting of one half-cavity, this offsetting being provided between said annular rings or between the two sets of rollers, or between said two rings and the complement between said two sets of rollers, this, with control means causing said first apparatus to slide in an alternating reciprocating movement and with output means (37, 38) to which said second apparatus imparts a rotational movement, said translation movement causing said roller to roll on said cavity to the bottom of the V shape, which precisely supplies the desired rotational movement.

2. A device as claimed in Claim 1, characterised in that in a case (21) of cylindrical shape with a square base round said shaft, said control means comprise two plates (25, 26) which carry the two above-mentioned annular rings and are rigidly connected by said shaft to means for locking this assembly against rotation, the second apparatus comprises two plates braced (31, 32) by a sleeve (33) which surrounds said shaft and rotates in said case on thrust bearings (34), these two plates each carry a set of rollers (5, 6) and a toothed ring (35, 36) which is in the form of a non-reversible screw, meshing with a toothed wheel (37, 38 respectively) rigidly connected to an output shaft (41, 42).

3. A device as claimed in Claim 2, characterised in that said shaft carries, at each of its ends, a push rod outside the case.

4. A device as claimed in Claim 2, characterised in that said case forms, at each end, a pneumatic cylinder (43, 44) with a resilient diaphragm (47, 48) in which said plates of the control means serve as pistons.

5. A device as claimed in Claim 4, characterised in that said cylinders, with the diaphragms, and the plate-pistons have a larger diameter than that of the central portion of the case.

6. A device as claimed in Claim 2, characterised in that the case contains an electric motor system as control means.

7. A device as claimed in Claim 6, characterised in that said electric motor system comprises on the one hand a pair of solenoids (56, 57) housed symmetrically in the central portion of the case, round said shaft, and on the other hand a ring (55) of soft iron mounted on said shaft.

8. A device as claimed in any one of the Claims 2 to 7, characterised in that each toothed ring (35, 36) is in the form of a non-reversible screw which meshes with a toothed wheel (36—61, 38—62) rigidly connected to an output shaft (41—63, 42—64), and the two toothed rings may be of different pitch.

9. A device as claimed in any one of the Claims 2 to 8, characterised in that it comprises a device for maintaining the first apparatus in its end-of-travel positions, particularly a reversible frusto-conical spring.

10. A device as claimed in any one of Claims 1 to 9, characterised in that it comprises a free wheel without play on the output shaft.

11. A device as claimed in Claim 1, characterised in that it comprises a case (21) of generally cylindrical shape comprising the axis XX, inside which there is mounted the first above-mentioned apparatus of which the shaft (22) carries two pistons (51, 52) for the pneumatic control of said alternating reciprocating translation movement, this with means for guiding said movement, in that the cavities of one of the two rings of the first apparatus are offset angularly in relation to those of the other ring, this offsetting being equal to half the width of a cavity, and in that said second apparatus (12) comprises a sleeve (33) rotating in said case (21) and carrying a non-reversible toothed wheel (35) which meshes with an output pinion (37), two plates (31, 32) being mounted on said sleeve, each plate being thus mounted with an angular clearance at least equal to half the width of said cavities and taking up said angular clearance by means of a spring (13, 14), each plate carrying a plurality of cylindrical rollers (5, 6).

12. A device as claimed in Claim 11, characterised in that each of the above-mentioned two springs is reversible under the action of a control.

Fig. 1

Fig. 2

Fig. 3

Fig. 4

Fig. 5

Fig. 6

# Fig.7

## Fig.8

Fig. 9

# Fig. 10

# Fig. 11

Fig.12

Fig.13

Fig. 14

Fig. 15

0 001 022

Fig. 16

Fig. 17

Fig. 18

Fig. 19

0001022

# Fig. 20

# Fig. 21

# Fig. 22

Fig. 23